# EUROPEAN PATENT APPLICATION

(11) **EP 4 366 403 A1**
(43) Date of publication of application: **08.05.2024**
(21) Application number: 23207431.0
(22) Date of filing: 02.11.2023
(51) Int. Cl.: H04W 60/06

(54) **DEREGISTRATION AND EMM PARAMETER HANDLING CONSIDERING ACCESS TYPE**

(30) Priority: 03.11.2022 US 202263382125 P; 24.10.2023 US 202318493756
(71) Applicant: MediaTek Inc., Hsin-Chu 300 (TW)
(72) Inventor: LIN, Yu-Hsin, Hsinchu City 30078 (TW); LIN, Yuan-Chieh, Hsinchu City 30078 (TW)
(74) Representative: Hoefer & Partner Patentanwälte mbB

(57) **Abstract**

A method of handling de-registration and EPS mobility management, abbreviated to EMM, parameter for 3GPP when UE receives a de-registration request message via non-3GPP is proposed. There is an access type in the de-registration type IE in the de-registration request message. In one novel aspect, a UE handles EMM parameters of the de-registration procedure depending on the received access type in the de-registration type IE. Upon receiving a DEREGISTRATION REQUEST message, if the de-registration request is for 3GPP access or for 3GPP access and non-3GPP access, the UE performs a local release of the PDU sessions over 3GPP access and non-3GPP access, if any. Based on the 5GMM cause, UE also handles the corresponding EMM parameters including EMM state, EPS update status, 4G-GUTI, last visited registered TAI, TAI list, eKSI and attach attempt counter.

## Description

### Field of the Invention

The disclosed embodiments relate generally to wireless communication, and, more particularly, to de-registration and EPS mobility management (EMM) parameter handling when UE receives a de-registration request message via non-3GPP access.

### Background of the Invention

Third generation partnership project (3GPP) and 5G New Radio (NR) mobile telecommunication systems provide high data rate, lower latency and improved system performances. In 3GPP NR, 5G terrestrial New Radio (NR) access network (includes a plurality of base stations, e.g., Next Generation Node-Bs (gNBs), communicating with a plurality of mobile stations referred as user equipment (UEs). Orthogonal Frequency Division Multiple Access (OFDMA) has been selected for NR downlink radio access scheme due to its robustness to multipath fading, higher spectral efficiency, and bandwidth scalability. Multiple access in the downlink is achieved by assigning different sub-bands (i.e., groups of subcarriers, denoted as resource blocks (RBs)) of the system bandwidth to individual users based on their existing channel condition.

Operators are seeking ways to balance data traffic between mobile cellular networks and non-3GPP access in a way that is transparent to users and reduces mobile network congestion. In 5GS, UEs that can be simultaneously connected to both 3GPP access and non-3GPP access (using 3GPP NAS signalling), thus the 5GS is able to take advantage of these multiple accesses to improve the user experience, optimize the traffic distribution across various accesses. Thus, a LTE can register to both 3GPP and non-3GPP and establish PDU sessions or MA PDU sessions over both 3GPP and non-3GPP sessions.

If a UE is registered over both 3GPP access and non-3GPP access at the same time, then the LTE can receive messages from both accesses. For example, when UE receives a de-registration request message from the network, it is possible that the UE can get de-registered over 3GPP access when the de-registration request message received via non-3GPP access. In the current specification, the cause handling is determined by which access type the message is received. If the message was received via 3GPP access and the UE is operating in single-registration mode, the UE handles EMM parameters as specified in 3GPP TS 24.301 for the case when a DETACH REQLTEST is received with the EMM cause with the same value and with detach type set to "re-attach not required", or the UE sets the EPS update status to EU2 NOT UPDATED, resets the attach attempt counter, and enters the state EMM-DEREGISTERED. However, some handling for 3GPP access will be missed if the message was received via non-3GPP access. The UE may not handle EMM parameters including EMM state, EPS update status, 4G-GUTI, TAI list and eKSI if the UE receives a deregistration request over non-3GPP access.

A solution is sought.

### Summary of the Invention

This is achieved by a method and user equipment of interactive display according to claims 1 and 12. The dependent claims pertain to corresponding further developments and improvements.

As will be seen more clearly from the detailed description following below, a method of handling de-registration and EPS mobility management (EMM) parameter for 3GPP when UE receives a de-registration request message containing an access type is proposed. There is an access type in the de-registration type IE in the de-registration request message. In one novel aspect, a UE handles EMM parameters of the de-registration procedure depending on the received access type in the de-registration type IE. Upon receiving a DEREGISTRATION REQLTEST message over non-3GPP access, if the de-registration request is for 3GPP access or for 3GPP access and non-3GPP access, the UE performs a local release of the PDU sessions over 3GPP access and non-3GPP access, if any. Based on the 5GMM cause, UE also handles the corresponding EMM parameters including EMM state, EPS update status, 4G-GUTI, last visited registered TAI, TAI list, eKSI and attach attempt counter. Upon receiving a DEREGISTRATION REQUEST message over 3GPP access, if the de-registration request is for non-3GPP access, the UE performs a local release of the PDU sessions non-3GPP access, if any, and skip handling the EMM parameters.

In one embodiment, a UE maintains a set of EPS mobility management (EMM) parameters, wherein the UE is registered to a 5G network over 3GPP access. The UE is also registered to the 5G network over non-3GPP access. The UE later receives a DEREGISTRATION REQUEST message from the 5G network over non-3GPP access, wherein the message carries a de-registration type Information element (IE) comprising an access type and a 5GMM cause value. The UE then performs de-registration from 5G 3GPP and handling the EMM parameters based on the access type and the 5GMM cause value, wherein the message is received over non-3GPP access, and the access type indicates 3GPP access or indicates both 3GPP access and non-3GPP access.

Other embodiments and advantages are described in the detailed description below. This summary does not purport to define the invention. The invention is defined by the claims.

### Brief Description of the Drawings

Figure 1 illustrates an exemplary 5G network and a method of handling de-registration and EPS mobility management (EMM) parameter when UE receives a de-registration request message via non-3GPP access in accordance with one novel aspect.
Figure 2 illustrates simplified block diagrams of a user equipment (LTE) and a network entity in accordance with embodiments of the current invention.
Figure 3 illustrates an example of a de-registration type IE carrying an access type, and a UE handles the de-registration procedure and EMM parameters based on the access type.
Figure 4 illustrates an example of 5GMM cause values carried by a de-registration request message, and a UE handles a de-registration procedure and EMM parameters based on the 5GMM cause value.
Figure 5 illustrates one embodiment of a sequence flow between a LTE and a 5G network for a de-registration procedure in accordance with one novel aspect.
Figure 6 is a flow chart of a method of handling de-registration and EPS mobility management (EMM) parameter for 3GPP when UE receives a de-registration request message via non-3GPP in accordance with one novel aspect of the present invention.

### Detailed Description

Reference will now be made in detail to some embodiments of the invention, examples of which are illustrated in the accompanying drawings.

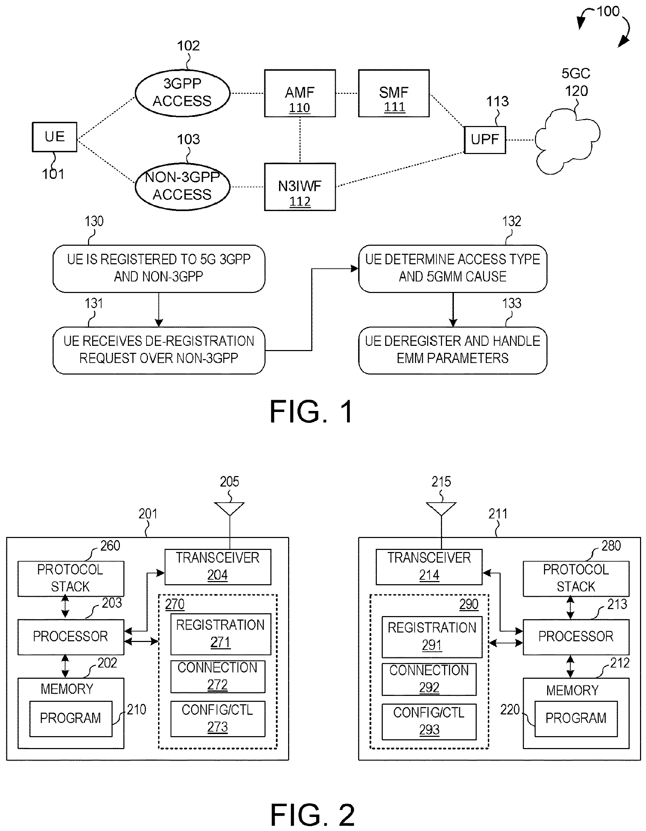

Figure 1 illustrates an exemplary 5G network and a method of handling de-registration and EPS mobility management (EMM) parameter when UE receives a de-registration request message via non-3GPP access in accordance with one novel aspect. 5G new radio (NR) network 100 comprises a user equipment (UE) 101, a 3GPP access 102 (e.g., a 3GPP radio access network (RAN)), a non-3GPP access 103 (e.g., a non-3GPP AN), an access and mobility management function (AMF) 110, a session management function (SMF) 111, a non-3GPP interworking function (N3IWF) 112, a user plane function (UPF) 113, and a 5G core (5GC) data network 120. The AMF 110 communicates with the base stations in the 3GPP access 102, the SMF 111, and the UPF 113 for access and mobility management of wireless access devices in the 5G network 100. The SMF 111 is primarily responsible for interacting with the decoupled data plane, creating, updating, and removing PDU sessions and managing session context with the UPF 113. The N3IWF 112 interfaces to 5G core network control plane functions, responsible for routing messages outside 5G AN. Note that intersystem change can be performed between 5G 3GPP (N1 mode) and 4G 3GPP (S1 mode).

In Access Stratum (AS) layer, an RAN provides radio access for the LTE 101 via a radio access technology (RAT). In Non-Access Stratum (NAS) layer, the AMF 110 and the SMF 111 communicate with RAN and 5GC for access and mobility management and PDU session management of wireless access devices in the 5G network 100. The 3GPP access 102 may include base stations (gNBs or eNBs) providing radio access for the LTE 101 via various 3GPP RATs including 5G, 4G, and 3G/2G. The non-3GPP access 103 may include access points (APs) providing radio access for the UE 101 via non-3GPP RAT including WiFi. The UE 101 can obtain access to data network 120 through 3GPP access 102, AMF 110, SMF 111, and UPF 113. The UE 101 can obtain access to data network 120 through non-3GPP access 103, N3IWF 112, AMF 110, SMF 111, and UPF 113. The UE 101 may be equipped with a single radio frequency (RF) module or transceiver or multiple RF modules or transceivers for services via different RATs/CNs. In some examples, LTE 101 may be a smart phone, a wearable device, an Internet of Things (IoT) device, a tablet, etc.

If a UE is registered over both 3GPP access and non-3GPP access at the same time, then the LTE can receive messages from both accesses. For example, when UE receives a de-registration request message from the network, it is possible that the UE can get de-registered over 3GPP access when the de-registration request message received via non-3GPP access. In the current specification, the cause handling is determined by which access type the message is received. If the message was received via 3GPP access and the UE is operating in single-registration mode, the UE handles EMM parameters as specified in 3GPP TS 24.301 for the case when a DETACH REQLTEST is received with the EMM cause with the same value and with detach type set to "re-attach not required", or the UE sets the EPS update status to EU2 NOT UPDATED, resets the attach attempt counter, and enters the state EMM-DEREGISTERED. However, some handling for 3GPP access will be missed if the message was received via non-3GPP access. For example, if the message was received via non-3GPP access, then EMM parameters will not be handled properly. Moreover, if the message was received via 3GPP access and the received access type indicating non-3GPP access, the UE will mis-handle EMM parameters unexpectedly.

In accordance with one novel aspect, a method of handling de-registration and EPS mobility management (EMM) parameter for 3GPP when UE receives a de-registration request message via non-3GPP is proposed. As depicted in Figure 1, UE 101 is registered to the 5G network over both 3GPP access 102 and non-3GPP access 103 (130). Later on, UE 101 receives a network-initiated de-registration request message over non-3GPP access 103 (131). UE 101 then determines an access type and a 5GMM cause value contained in the de-registration request (132). If the access type indicates 3GPP or indicates both 3GPP and non-3GPP, UE 101 performs deregistration and handles EMM parameters based on the 5GMM cause value (133). The handling of the EMM parameters by UE 101 avoids possible unexpected usage, such as unexpected usage during the next 4G attach procedures.

Note that there is an access type in the de-registration type IE in the de-registration request message. The current spec specifies the LTE handles the 5GMM cause depending on via which access the message is received, which is incorrect. In one novel aspect, UE 101 handles EMM parameters of the de-registration procedure depending on the received access type in the de-registration type IE. Upon receiving a DEREGISTRATION REQUEST message and the de-registration request is for 3GPP access or for 3GPP access and non-3GPP access, UE 101 shall perform a local release of the PDU sessions over 3GPP access and non-3GPP access, if any. Based on the 5GMM cause, UE 101 also handles the corresponding EMM parameters including EMM state, EPS update status, 4G-GUTI, last visited registered TAI, TAI list, eKSI and attach attempt counter.

Figure 2 illustrates simplified block diagrams of wireless devices, e.g., a UE 201 and a network entity 211 in accordance with embodiments of the current invention. Network entity 211 may be a base station and/or an AMF/SMF. Network entity 211 has an antenna 215, which transmits and receives radio signals. A radio frequency RF transceiver module 214, coupled with the antenna, receives RF signals from antenna 215, converts them to baseband signals and sends them to processor 213. RF transceiver 214 also converts received baseband signals from processor 213, converts them to RF signals, and sends out to antenna 215. Processor 213 processes the received baseband signals and invokes different functional modules to perform features in base station 211. Memory 212 stores program instructions and data 220 to control the operations of base station 211. In the example of Figure 2, network entity 211 also includes protocol stack 280 and a set of control function modules and circuits 290. Protocol stacks 280 includes Non-Access-Stratum (NAS) layer to communicate with an AMF/SMF/MME entity connecting to the core network, Radio Resource Control (RRC) layer for high layer configuration and control, Packet Data Convergence Protocol/Radio Link Control (PDCP/RLC) layer, Media Access Control (MAC) layer, and Physical (PHY) layer. In one example, control function modules and circuits 290 includes a registration circuit 291 that handles registration procedures, a connection handling circuit 292 that handles signaling connections, and a configuration and control circuit 293 that provides different parameters to configure and control UE of related functionalities including registration and de-registration. The network entity 211 can be one 5GS network component or multiple 5GS network components (e.g., access network + AMF + N3IWF + SMF, etc.)

Similarly, UE 201 has memory 202, a processor 203, and radio frequency (RF) transceiver module 204. RF transceiver 204 is coupled with antenna 205, receives RF signals from antenna 205, converts them to baseband signals, and sends them to processor 203. RF transceiver 204 also converts received baseband signals from processor 203, converts them to RF signals, and sends out to antenna 205. Processor 203 processes the received baseband signals and invokes different functional modules and circuits to perform features in UE 201. Memory 202 stores data and program instructions 210 to be executed by the processor to control the operations of LTE 201. Suitable processors include, by way of example, a special purpose processor, a digital signal processor (DSP), a plurality of micro-processors, one or more micro-processor associated with a DSP core, a controller, a microcontroller, application specific integrated circuits (ASICs), file programmable gate array (FPGA) circuits, and other type of integrated circuits (ICs), and/or state machines. A processor associated with software may be used to implement and configure features of LTE 201.

UE 201 also includes protocol stacks 260 and a set of control function modules and circuits 270. Protocol stacks 260 includes NAS layer to communicate with an AMF/SMF/MME entity connecting to the core network, RRC layer for high layer configuration and control, PDCP/RLC layer, MAC layer, and PHY layer. Control function modules and circuits 270 may be implemented and configured by software, firmware, hardware, and/or combination thereof. The control function modules and circuits, when executed by the processors via program instructions contained in the memory, interwork with each other to allow UE 201 to perform embodiments and functional tasks and features in the network. In one example, control function modules and circuits 270 includes a registration handling circuit 271 that performs registration and deregistration procedures with the network, an access and connection handling circuit 272 that handles RRC and NAS signaling connection, and a config and control circuit 273 that handles configuration and control parameters including maintaining and handling a set of EMM parameters.

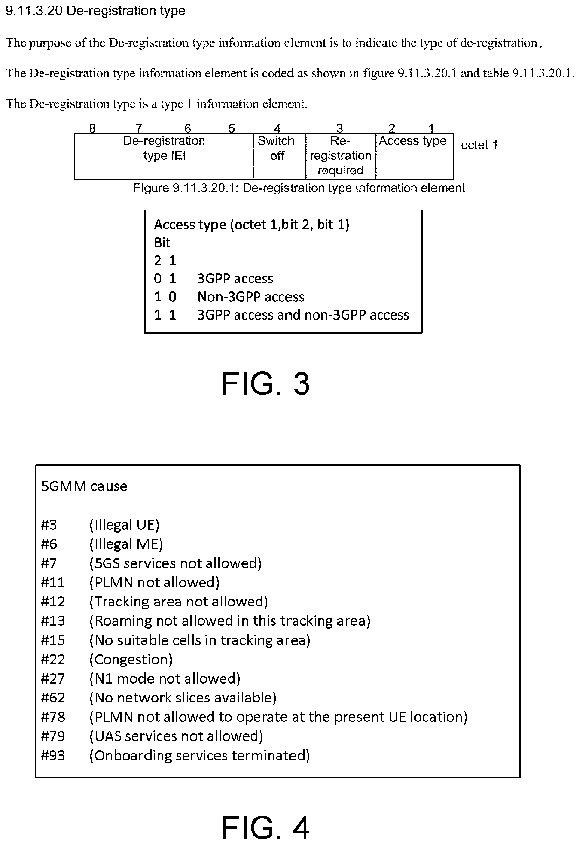

Figure 3 illustrates an example of a de-registration type IE carrying an access type, and a LTE handles the de-registration procedure and EMM parameters based on the access type. For a network-initiated de-registration procedure, the network sends a DEREGISTRATION REQUEST message to the UE. The DEREGISTRATION REQUEST message carries a de-registration type information element (IE) indicating a de-registration type field, a switch-off field, a re-registration required field, and an access type field. The DEREGISTRATION REQUEST message also carries a 5GMM cause value indicating the reason for de-registration. Specifically, the de-registration type IE comprises an "Access Type" field having two bits, which indicates the access type that the de-registration request should be applied with. The "Access Type" field has two bits, a bit value of "0 1" represents 3GPP access, a bit value of "1 0" represents non-3GPP access, and a bit value of "1 1" represents both 3GPP access and non-3GPP access. When UE receives the DEREGISTRATION REQUEST message over non-3GPP access type, then UE still needs to check the "access type" carried by the de-registration type IE. If the access type indicates 3GPP access type, or indicates 3GPP access and non-3GPP access type, then LTE determines that the de-registration procedure is for 3GPP access, or for both 3GPP and non-3GPP access. Accordingly, LTE performs deregistration and handles corresponding EMM parameters based on the access type. When UE receives the DEREGISTRATION REQUEST message over 3GPP access type, then UE also needs to check the "access type" carried by the de-registration type IE. If the access type indicates non-3GPP access, then UE determines that the de-registration procedure is for non-3GPP access. Accordingly, LTE performs deregistration and skip handling corresponding EMM parameters based on the access type.

Figure 4 illustrates an example of 5GMM cause values carried by a de-registration request message, and a UE handles a de-registration procedure and EMM parameters based on the 5GMM cause value. For a network-initiated de-registration procedure, the network sends a DEREGISTRATION REQUEST message to the UE. The DEREGISTRATION REQUEST message carries a de-registration type information element (IE) and also carries a 5GMM cause value indicating the reason for de-registration. Specifically, the 5GMM cause values may include the following: #3 (illegal LTE), #6 (Illegal ME), #7 (5GS services not allowed), #11 (PLMN not allowed), #12 (Tracking area not allowed), #13 (Roaming not allowed in this tracking area), #15 (No suitable cells in tracking area), #22 (Congestion), #27 (N1 mode not allowed), #62 (No network slices available), #78 (PLMN not allowed to operate at the present LTE location), #79 (UAS services not allowed), and #93 (Onboarding services terminated). Based on the 5GMM cause value, LTE can perform deregistration and handle EMM parameters accordingly.

In one example, the network determines that there is a signaling congestion happened, and decides to de-register a UE with a congestion cause value (#22) and sends a deregistration request message to the UE. The UE is registered to both 3GPP and non-3GPP access, and receives the deregistration request message over non-3GPP access. The deregistration request message carries a 5GMM cause and an access type in a de-registration type IE. The UE determines the de-registration request/procedure is for 3GPP access, or for both 3GPP access and non-3GPP access, the UE further handles the EMM parameters accordingly. If the 5GMM cause is #22 (congestion), and the UE is operating in single-registration mode, then the UE sets the EPS update status to EU2 NOT UPDATED, resets the attach attempt counter, and enters the state EMM-DEREGISTERED. Note that regardless of over which access the deregistration request message is received, the LTE can determine the de-registration request/procedure is for what access via a received access type in the de-registration type IE of the de-registration message. When the received Access type is *3GPP access,* the LTE determines the de-registration request/procedure is for 3GPP access. When the received Access type is *3GPP access and non-3GPP access,* the LTE determines the de-registration request/procedure is for both 3GPP access and non-3GPP access.

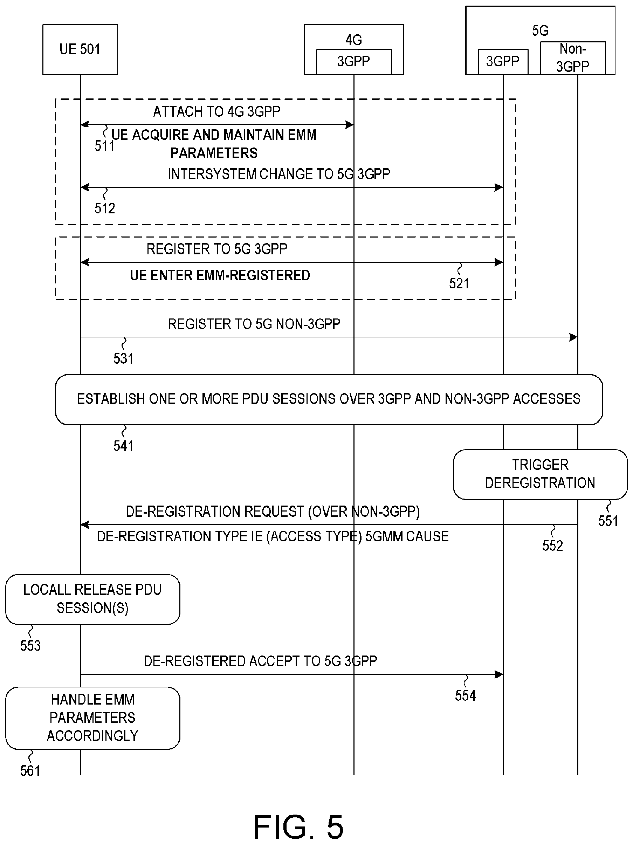

Figure 5 illustrates one embodiment of a sequence flow between LTE 501 and a 5G network for a de-registration procedure in accordance with one novel aspect. LTE 501 can register to a 5G network over 3GPP access via two different alternatives. In a first alternative, LTE 501 attaches to a 4G 3GPP network first and then registers to a 5G 3GPP network later. In step 511, UE 501 attaches to a 4G network over 3GPP access. UE 501 acquires EPS mobility management (EMM) parameters from the network, such as a 4G global unique temporary ID (GUTI), a tracking area identity (TAI) list, and a Key Set Identifier (eKSI). UE 501 also maintains a list of other EMM parameters such as: an EMM state, an EPS update status, a last visited registered TAI, and an attach attempt counter. In step 512, LTE 501 performs intersystem change from 4G 3GPP to 5G 3GPP. LTE 501 continues to maintain the list of EMM parameters in 5G 3GPP. In a second alternative, LTE 501 registers to a 5G network over 3GPP access directly and maintains the list of EMM parameters in 5G 3GPP. In this case, the most important parameter to be maintained is EMM state. In the single registration mode, the state should always be sync, i.e., the 5GMM state is registered, the EMM state should also be registered, with that, the UE knows the UE should perform a TAU procedure when it enter S1 mode (i.e., depending on the EMM state to decide which procedure to be performed). In step 521, LTE 501 enters EMM state of EMM-REGISTERED upon the successful completion of a registration procedure over 3GPP access in 5GN1 mode and when the UE is operating in the single-registration mode. In step 531, UE 501 registers to the 5G network over non-3GPP access.

UE 501 is now registered to 5G 3GPP and is also registered to 5G non-3GPP. In one example, in step 541, LTE 501 establishes one or more PDU sessions over 3GPP and/or non-3GPP access. The one or more PDU sessions can be a single access PDU session or a multiple access PDU session for data communication. A PDU session defines the association between the UE and the data network that provides a PDU connectivity service. Each PDU session is identified by a PDU session ID, and can be established over a 3GPP RAN, and/or over a non-3GPP AN. 5GS session management (5GSM) for PDU sessions over both 3GPP access and non-3GPP access are managed by AMF and SMF via NAS signaling. UE 501 can transmit and receive signaling and data over the established PDU session(s) via 3GPP and/or non-3GPP access.

Later on, in step 551, the 5G network determines a condition is met for triggering a deregistration procedure for LTE 501. For example, a network congestion occurs, and the network decides to initiate a deregistration procedure for UE 501. In step 552, the network sends a DE-REGISTRATION REQUEST message to UE 501 over non-3GPP access. The DE-REGISTRATION REQUEST message carries a de-registration type IE as well as a 5GMM cause value. The de-registration type IE further comprises an access type, which indicates the deregistration procedure should be applied for 3GPP, for non-3GPP, or for both 3GPP and non-3GPP. If the access type indicates 3GPP access, or indicates 3GPP and non-3GPP access, even though the DE-REGISTRATION REQUEST message itself is received over non-3GPP access, then LTE 501 still determines that the requested deregistration procedure is for 3GPP access. In step 553, UE 501 locally releases all established PDU session(s), if any. In step 554, UE 501 completes the deregistration procedure to deregister from 5G 3GPP, e.g., sending a DE-REGISTRATION ACCEPT message to the 5G network over 3GPP.

In step 561, based on the 5GMM cause value, UE 501 also handles previously maintained EMM parameters accordingly. The EMM parameters includes EMM state, EPS update status, 4G-GUTI, last visited registered TAI, TAI list and eKSI, and an attach attempt counter. For example, UE 501 can delete the 4G-GUTI because of 3GPP congestion (e.g., 5GMM cause value #22). Further, the USIM of UE 501 shall be considered as invalid for non-EPS services until switching off or the UICC containing the USIM is removed or timer T3245 expires.

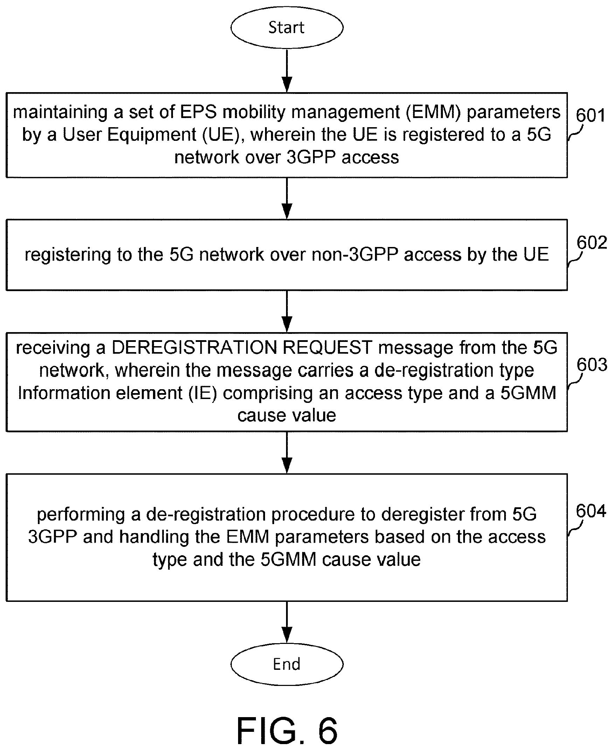

Figure 6 is a flow chart of a method of handling de-registration and EPS mobility management (EMM) parameter for 3GPP when UE receives a de-registration request message via non-3GPP in accordance with one novel aspect of the present invention. In step 601, a UE maintains a set of EPS mobility management (EMM) parameters, wherein the LTE is registered to a 5G network. In step 602, the UE is also registered to the 5G network over non-3GPP access. In step 603, the LTE receives a DEREGISTRATION REQLTEST message from the 5G network, wherein the message carries a de-registration type Information element (IE) comprising an access type and a 5GMM cause value. In step 604, the UE performs a de-registration procedure to deregister from 5G 3GPP and handling the EMM parameters based on the access type and the 5GMM cause value. In one embodiment, the set of EMM parameters comprises at least one of an EMM state, an EPS update status, a 4G global unique temporary ID (GUTI), a last visited registered tracking area identity (TAI), a TAI list and a Key Set Identifier (eKSI), and an attach attempt counter.

Although the present invention has been described in connection with certain specific embodiments for instructional purposes, the present invention is not limited thereto. Accordingly, various modifications, adaptations, and combinations of various features of the described embodiments can be practiced without departing from the scope of the invention as set forth in the claims.

## Claims

1. A method, **characterized by**:
maintaining a set of EPS mobility management, abbreviated to EMM, parameters by a User Equipment (101), abbreviated to UE, wherein the UE is registered to a 5G network (100) over 3GPP access (601);
registering to the 5G network (100) over non-3GPP access by the UE (602);
receiving a DEREGISTRATION REQUEST message from the 5G network (100), wherein the message carries a de-registration type Information element, abbreviated to IE, comprising an access type and a 5GMM cause value (603); and
performing a de-registration procedure to deregister from 5G 3GPP and handling the EMM parameters based on the access type and the 5GMM cause value (604).

2. A User Equipment (101), abbreviated to UE, **characterized by**:
a registration circuit (291) that registers to a 5G network (100) over non-3GPP access, wherein the UE maintains a set of EPS mobility management, abbreviated to EMM, parameters;
a receiver that receives a DEREGISTRATION REQLTEST message from the 5G network (100), wherein the message carries a de-registration type Information element, abbreviated to IE, comprising an access type and a 5GMM cause value; and
a de-registration circuit that performs a de-registration procedure to deregister the LTE from 5G 3GPP and handling the EMM parameters based on the access type and the 5GMM cause value.

3. The method of Claim 1 or the UE of claim 2, **characterized in that** the message is received over non-3GPP access, and the access type indicates 3GPP access or indicates both 3GPP access and non-3GPP access.

4. The method of Claim 1 or the LTE of claim 2, **characterized in that** the set of EMM parameters comprises at least one of an EMM state, an EPS update status, a 4G global unique temporary ID , abbreviated to GUTI, a last visited registered tracking area identity, abbreviated to TAI, a TAI list and a Key Set Identifier, abbreviated to eKSI, and an attach attempt counter.

5. The method or the UE of Claim 4, **characterized in that** the UE sets the EPS update status to EU2 NOT UPDATED, resets the attach attempt counter, and enters an EMM-DEREGISTERED state.

6. The method of Claim 1 or the UE of claim 2, **characterized in that** the 5GMM cause value indicates one of illegal UE, Illegal ME, 5GS services not allowed, PLMN not allowed, Tracking area not allowed, Roaming not allowed in this tracking area, No suitable cells in tracking area, Congestion, N1 mode not allowed, No network slices available, PLMN not allowed to operate at the present UE location, UAS services not allowed, and Onboarding services terminated.

7. The method of Claim 1 or the LTE of claim 2, **characterized in that** the LTE is registered to a 4G network over 3GPP access and then performs intersystem change to the 5G network (100) over 3GPP.

8. The method of Claim 1 or the LTE of claim 2, **characterized in that** the LTE is registered to the 5G network (100) over 3GPP and enters an EMM-REGISTERED state upon successful registration.

9. The method of Claim 1 or the UE of claim 2, **characterized in that** the 5GMM cause value indicates a network congestion, and wherein the UE deletes a 4G-GUTI as one of the EMM parameters.

10. The method of Claim 1, **characterized in that** the LTE is operating in the single-registration mode.

11. The method of Claim 1, **characterized in that** the access type indicates *3GPP access,* and the UE determines the de-registration procedure is for 3GPP access.

12. The method of Claim 1 or the UE of claim 2, **characterized in that** the access type indicates *3GPP access and non-3GPP access,* and the LTE determines the de-registration procedure is for both 3GPP access and non-3GPP access.
